# EUROPEAN PATENT APPLICATION

(11) **EP 2 309 202 A1**
(43) Date of publication of application: **13.04.2011**
(21) Application number: 09738820.1
(22) Date of filing: 28.04.2009
(51) Int. Cl.: F24J 2/28, F24J 2/08, F24J 2/10, F24J 2/14, F24J 2/38, F24J 2/50

(54) **SOLAR ENERGY ABSORBER**

(30) Priority: 02.05.2008 JP 2008120538; 07.08.2008 JP 2008203940
(71) Applicant: Electra Holdings Co., Ltd., Chiyoda-ku Tokyo 100-0006 (JP)
(72) Inventor: YABE, Takashi, Tokyo 114-0013 (JP); SATOH, Yuji, Tokyo 142-0041 (JP)
(74) Representative: Skone James, Robert Edmund
(86) International application number: PCT/JP2009/058347
(87) International publication number: WO 2009/133883

(57) **Abstract**

It aims to provide a solar heat collecting apparatus that can efficiently collect energy from solar light. The solar heat collecting apparatus comprises an opened container part 22 that accumulates heat, a closed part 25 that closes the container part 22 and has an opening part 26 to let the collected solar light in, and a light absorbing part 36 that absorbs the solar light dispersed by passing through the opening part 26 so that it is converted into heat.

## Description

### FIELD OF THE INVENTION

The present invention is related to a solar heat collecting apparatus that collects energy from solar light.

### BACKGROUND OF THE INVENTION

As we today are concerned about global warming, many studies have been conducted for seeking a renewable energy that does not use electricity. In particular, how to take advantage of the abundant energy from the sun is an increasingly important issue for the future. With the background, the heat collecting apparatus and desalination apparatus etc. that use the solar light are the most impending items to be realized. In order to realize these, it is necessary to efficiently absorb the heat from the solar light and increase the temperature of fluid etc. For example, Patent Document 1 discloses a heat collecting apparatus that is provided with one or more heat collecting units comprising a tubular heat collector inside which there is a path for the fluid in order to convert the received solar light into heat and to increase the temperature of the fluid, and a reflector plate that is partially surrounding the heat collector in order to reflect the solar light thereto, wherein the reflector plate is rotatably supported about the tubular heat collector.

### PRIOR ART DOCUMENT

### Patent Document

Patent Document 1: JPA 2002-22283

### SUMMARY OF THE INVENTION

### PROBLEM TO BE SOLVED BY THE INVENTION

As the above-described conventional example, a general method for obtaining hot water from the sun is to produce a high temperature medium by leading the solar light through transparent glass or plastic that covers the front part of the casing so that this light hits and heats an absorber. However, the heat loss due to radiation and convection from the high temperature part becomes significant as the temperature gets higher. Therefore there was a limitation on the temperature that can be efficiently achieved by the solar light.

The present invention is made to solve the above problem, and the present invention aims to provide the solar heat collecting apparatus that efficiently collects energy from solar light.

### MEANS OF SOLVING THE PROBLEM

In order to solve the above problem, the invention as claimed in Claim 1 comprises an opened container part that accumulates heat, a closed part that closes the container part and has an opening part to let the collected solar light in, and a light absorbing part that absorbs the solar light dispersed by passing through the opening part so that it is converted into heat.

The invention as claimed in Claim 2 is the solar heat collecting apparatus as claimed in Claim 1, wherein the opening part is provided with a slit.

The invention as claimed in Claim 3 is the solar heat collecting apparatus as claimed in Claim 1 or Claim 2, wherein the width of the opening part is five times greater than the diameter of the focal point of the collected solar light.

The invention as claimed in Claim 4 is the solar heat collecting apparatus as claimed in any one of Claim 1 to Claim 3, wherein further a light guide is placed at the opening part and is provided with a reflection surface that reflects the solar light and leads it into the container part.

The invention as claimed in Claim 5 is the solar heat collecting apparatus as claimed in Claim 4, wherein the light guide is provided with an entrance part of the solar light and an exit part that output the solar light into the container part, and the light guide gradually widens from the entrance part towards the exit part.

The invention as claimed in Claim 6 is the solar heat collecting apparatus as claimed in Claim 5, wherein the light guide gradually widens from the exit part towards the entrance part.

The invention as claimed in Claim 7 is the solar heat collecting apparatus as claimed in Claim 5 or Claim 6, wherein the entrance part of the light guide is further provided with a spherical entrance window.

The invention as claimed in Claim 8 is the solar heat collecting apparatus as claimed in any one of Claim 1 to Claim 7, wherein the closed part has a depressed part, and the opening part is formed with a transparent material that lets the solar light through to the bottom of the depressed part.

The invention as claimed in Claim 9 is the solar heat collecting apparatus as claimed in any one of Claim 1 to Claim 8, further comprising a light collecting means for collecting the solar light.

The invention as claimed in Claim 10 is the solar heat collecting apparatus as claimed in Claim 9, wherein the light collecting means is a Fresnel lens that curves towards the opening part to form a depression.

The invention as claimed in Claim 11 is the solar heat collecting apparatus as claimed in any one of Claim 1 to Claim 10, further comprising a tracking means for tracking the sun in accordance with the movement of the sun.

The invention as claimed in Claim 12 is the solar heat collecting apparatus as claimed in Claim 11, wherein the tracking means moves the light collecting means with reference to the container part.

The invention as claimed in Claim 13 is the solar heat collecting apparatus as claimed in Claim 10 or Claim 11, wherein the tracking means is provided outside the opening part and has a rotation axis to rotate the light collecting means, and the entrance part of the light guide is positioned on the rotation axis.

The invention as claimed in Claim 14 is the solar heat collecting apparatus as claimed in any one of Claim 11 to Claim 13, wherein the tracking means moves the container part.

### ADVANTAGEOUS EFFECT OF THE INVENTION

According to the present invention, by comprising the opened container part that accumulates heat, the closed part that closes the container part and has an opening part to let the collected solar light in, and the light absorbing part that absorbs the solar light dispersed by passing through the opening part so that it is converted into heat; the collected solar light enters the container part from the opening part opened at the closed part, thus the solar light can easily get into the container part and the heat generated from the light absorbing part that absorbed the solar light dispersed from the focal point is less likely to escape from the container part, allowing to provide the solar heat collecting apparatus that can effectively collect energy from solar light with a little heat loss.

### BRIEF DESCRIPTION OF THE DRAWINGS

Fig. 1 shows a schematic diagram that illustrates a schematic configuration example of the solar heat collecting apparatus regarding the first embodiment according to the present invention.
Fig. 2 shows a schematic diagram that illustrates the principle of the solar heat collecting in the solar heat collecting apparatus of Fig. 1.
Fig. 3 shows a pattern diagram that illustrates a schematic configuration example of the conventional solar heat collecting apparatus.
Fig. 4 shows a diagram that indicates the radiant heat loss and the amount of heated water for temperatures.
Fig. 5 shows a schematic diagram that illustrates a schematic configuration example of the solar heat collecting apparatus regarding the second embodiment according to the present invention.
Fig. 6 shows a schematic diagram that illustrates a schematic configuration example of the first alternative example of the solar heat collecting apparatus of Fig. 5.
Fig. 7 shows a schematic diagram that illustrates a schematic configuration example of the second alternative example of the solar heat collecting apparatus of Fig. 5.
Fig. 8 shows a schematic diagram that illustrates a schematic configuration example of the third alternative example of the solar heat collecting apparatus of Fig. 5.
Fig. 9 shows a schematic diagram that illustrates a schematic configuration example of the fourth alternative example of the solar heat collecting apparatus of Fig. 5.
Fig. 10 shows a schematic diagram that illustrates a schematic configuration example of the solar heat collecting apparatus regarding the third embodiment according to the present invention.
Fig. 11 shows a schematic diagram that illustrates an example of the tracking means of the solar heat collecting apparatus of Fig. 10.
Fig. 12 shows a schematic diagram that illustrates another example of the tracking means of Fig. 11.
Fig. 13 shows a schematic diagram that illustrates a schematic configuration example of an alternative example of the solar heat collecting apparatus of Fig. 10.
Fig. 14 shows a diagram that illustrates an example of the temperature time characteristic wherein the heat of the solar light is collected into water by using the solar heat collecting apparatus of Fig. 10.
Fig. 15 shows a schematic diagram that illustrates a schematic configuration example of the solar heat collecting apparatus regarding the fourth embodiment according to the present invention.
Fig. 16 shows a schematic diagram that illustrates an example of the optical path in the light guide of the solar heat collecting apparatus of Fig. 15.
Fig. 17 shows a schematic diagram that illustrates an example of the optical path in the light guide of a comparative example.
Fig. 18 shows a schematic diagram that illustrates a schematic configuration example of the solar heat collecting apparatus regarding the fifth embodiment according to the present invention.
Fig. 19 shows a schematic diagram that illustrates a schematic configuration example of the solar heat collecting apparatus regarding the sixth embodiment according to the present invention.
Fig. 20 shows a schematic diagram that illustrates an example of the tracking means of the solar heat collecting apparatus of Fig. 19.
Fig. 21 shows a schematic diagram that illustrates a schematic configuration example of the solar heat collecting apparatus regarding the seventh embodiment according to the present invention.

### DESCRIPTION OF EMBODIMENTS

With reference to the drawings, the embodiments of the present invention are described hereinafter.

### (EMBODIMENT 1)

First, with reference to the drawings, the schematic configuration and functions of the solar heat collecting apparatus regarding the first embodiment according to the present invention is described. Although the drawings are used for describing the present invention which solves the above-described problem, the present invention shall not be limited to the embodiment illustrated in the drawings.

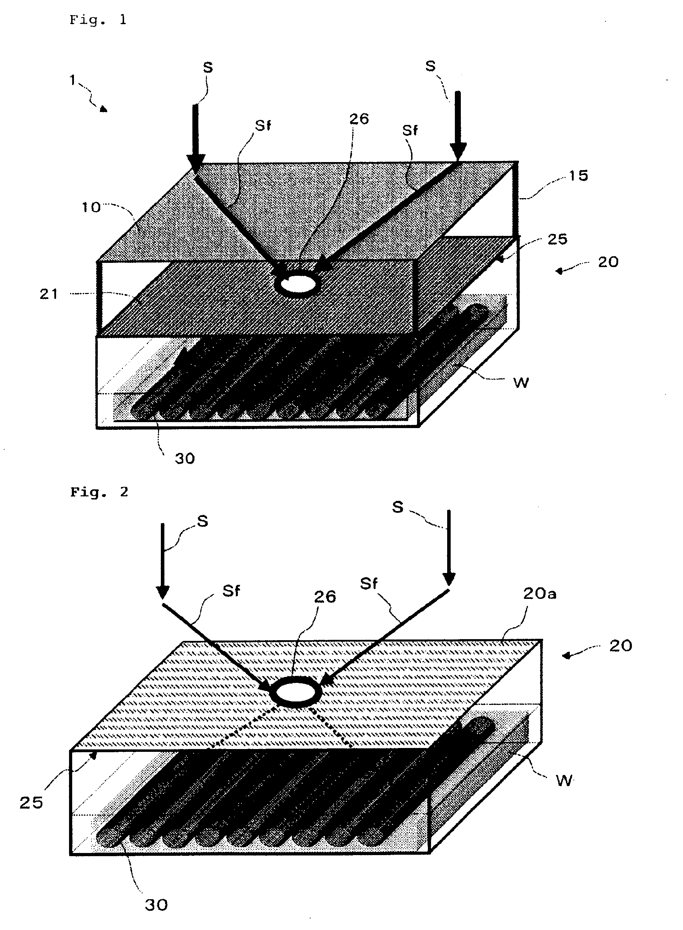

Fig. 1 shows a schematic diagram that illustrates a schematic configuration example of the solar heat collecting apparatus regarding the first embodiment according to the present invention.

As shown in Fig. 1, the solar heat collecting apparatus 1 comprises a Fresnel lens 10 that collects the solar light S, a heat-insulated water tank 20 that has an opened upper part 20a and accepts the solar light Sf that is collected by the Fresnel lens 10 to accumulate the heat of the solar light, a visor 25 that is an example of the closed part that closes the upper part 20a of the heat-insulated water tank 20 and has the opening part 26 for letting the collected solar light Sf in, and a light absorber 30 that is installed inside the heat-insulated water tank 20 and absorbs the solar light dispersed by passing through the opening part 26 so that it is converted into heat.

The Fresnel lens 10 is made of plastic and has a concentric groove in one side. The Fresnel lens 10 is supported by four supporting members 15 installed on the heat-insulated water tank 20 so that the focal point can come close to the surface of the heat-insulated water tank 20. The Fresnel lens 10 that is supported by the columns (supporting members 15) is placed at the upper part of the box (heat-insulated water tank 20). As described above, the Fresnel lens 10 is an example of the light collecting means for collecting the solar light, and has a function as an apparatus to collect the solar light. This Fresnel lens 10 sets the opening part 26 in the top surface of the box (heat-insulated water tank 20) as the focal point and narrows the solar light down small at this point. The solar heat collecting apparatus 1 is configured so that the light that has passed through the focal point is re-dispersed to heat the inside of the box.

Next, the heat-insulated water tank 20 has a shape of rectangular parallelepiped, and the surface on the side that the solar light S enters forms the opened upper part 20a. The side and the lower part of the heat-insulated water tank 20 has heat insulating properties and prevents the heat accumulated inside the heat-insulated water tank 20 from dissipating. The heat-insulated water tank 20 has water W that is an example of the medium or liquid as a heated object at the bottom of the inside. The water W becomes a high temperature medium due to the light absorber 30 that has absorbed the solar light. The heat-insulated water tank 20 is an example of the opened container part that accumulates heat. The closed container is formed by the container part and the closed part. Instead of water W, molten salt may be used as the medium or liquid.

Next, the visor 25 closes the upper part 20a of the heat-insulated water tank 20, reflecting the radiant heat from the inside of the heat-insulated water tank 20 and thus having the heat insulating function. The opening part 26 is formed at the center of the visor 25. As described above, the visor 25 is an example of the closed part that closes the container part and has an opening part to let the collected solar light in. The closed part such as the visor 25 may be formed together as the upper part 20a of the container such as the heat-insulated water tank 20. In this case, the container part is the part other than the upper part 20a of the container, that is, the side and the lower part of the container.

The opening part 26 is formed near the focal point of the Fresnel lens 10, and at the center of the upper part 20a of the heat-insulated water tank 20 where the collected solar light enters, that is, at the center of the visor 25. The opening part 26 is formed in a circular shape with a size through which the collected solar light can passes, and thus the solar light collected by the Fresnel lens 10 passes through to the inside of the heat-insulated water tank 20. Although the opening part 26 is not covered by a heat insulating material such as the visor 25 etc., since it is formed into a part of the surface of the visor 25, it has a function to prevent the dissipation of the heat inside the heat-insulated water tank 20 as much as possible. As described above, the opening part 26 is able to efficiently lead energy from solar light to the closed space in order to create a high temperature, while having a small opening that can suppress the radiation from or the convective loss of the heated medium inside.

Here, if the Fresnel lens 10 is 50 cm and the diameter of the focal point is about 1 cm, the size of the opening part 26 is about 5 cm in diameter. In fact, the collected solar light is not a point as such but is called a focal point, and the light intensity has a form of the Gaussian distribution in the radial direction. In order to take in as much solar energy as possible, the opening part 26 is better to have a large size, however it is better to be smaller in terms of heat loss. If the diameter of the focal point is set to σ, the standard deviation of the Gaussian distribution, the cumulative function of Gaussian distribution is Φ(3σ) = 0.49865 and Φ(4.8σ) = 0.50000, and therefore if the size of the opening part 26 is set to 5σ, most of the solar energy can be taken in. In comparison with the size of the Fresnel lens 10, the size of the opening part 26 is 1/10 of the size of the lens. As described above, the width of the opening part 26 is five times of the diameter of the focal point of the collected solar light.

Next, the surface of the light absorber 30 has been processed, for example, a surface with indentation or colored in black, so that the solar light can be easily absorbed and converted into heat. The light absorber 30 is submerged in the water W stored in the heat-insulated water tank 20. The light absorber 30 is an example of the light absorbing part that absorbs the solar light dispersed by passing through the opening part 26 so that it is converted into heat. The light absorber 30 has a function as a heating part that re-disperses and absorbs the collected solar light to create a high temperature medium. As shown in Fig. 1, although a plurality of light absorbers 30 may be aligned at the bottom of the heat-insulated water tank 20 to which the solar light that has passed through the opening part 26 is dispersed and irradiated so that the light is absorbed between the light absorbers 30 and is converted into heat, the light absorbing part may be formed instead of the light absorber wherein the inside of the heat-insulated water tank 20 may be indented or colored in black. Furthermore, the light absorbing part may be formed with the light absorber 30 and the inside of the heat-insulated water tank 20.

Next, the principle and operation of solar heat collecting is described.

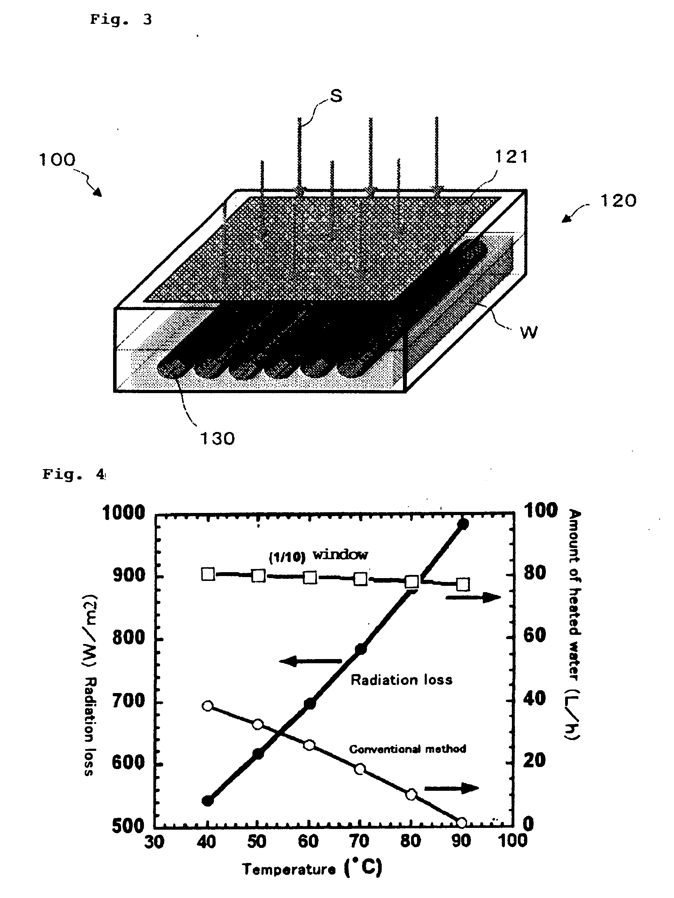

Fig. 2 shows a schematic diagram that illustrates the principle of solar heat collecting in the solar heat collecting apparatus 1, and also shows the principle of the means to solve the conventional problems. Fig. 3 shows a pattern diagram that illustrates a schematic configuration example of the conventional solar heat collecting apparatus.

As shown in Fig. 2, the solar light S is collected by a lens or mirror, and is lead into the heat-insulated water tank 20 through the small opening part 26 at the upper part of the heat-insulated water tank (box) 20.
The solar light Sf that has passed the opening part 26 is re-dispersed inside the heat-insulated water tank 20 and heats the absorber (light absorber) 30 inside it. Although the temperature of the inside of the heat-insulated water tank 20 becomes high, since the radiation loss is proportional to the opening area, the smaller the opening part is, the smaller the radiation loss becomes.

In contrast, as shown in Fig. 3, the conventional solar heat collecting apparatus 100 lets the solar light Sf in through a transparent plate 121 from the upper part of the heat-insulated water tank (box) 120. The solar light S is absorbed by the inside absorber 130 and heats this up to a high temperature. However, although the heat loss due to radiation and convention becomes large as the temperature increases, most of the loss is from the transparent plate 121 in the upper part. For example, the radiation loss is proportional to the biquadrate of the temperature, and therefore the increase rate of this loss is significant. Therefore once it reaches a certain temperature or more, the incoming heat turns into a loss as a whole, not being able to increase the temperature any more.

The solar heat collecting apparatus shown in Fig. 1 is an embodiment of the heat collecting apparatus that uses the above principle.

According to this embodiment, by comprising the opened heat-insulated water tank 20 that accumulates heat, the visor 25 that closes the upper part 20a of the heat-insulated water tank 20 and has the opening part 26 to let the collected solar light Sf in, and the light absorber 30 that absorbs the solar light dispersed by passing through the opening part 26 so that it is converted into heat; the collected solar light enters the heat-insulated water tank 20 from the opening part 26 opened in the visor 25, thus the solar light can easily get into the heat-insulated water tank 20 and the heat generated from the light absorber 30 that absorbed the solar light dispersed from the focal point is less likely to escape from the heat-insulated water tank 20, allowing to provide the solar heat collecting apparatus 1 that can effectively collect energy from solar light with a little heat loss.

If it comprises a light collecting means such as the Fresnel lens 10 for collecting the solar light S, this light collecting means allows the concentration of the solar light Sf at the opening part 26 opened in the visor 25 (closed part) so that the solar light Sf can easily get into the container part and the heat generated from the light absorber 30 (light absorbing part) is less likely to escape from the heat-insulated water tank 20 (container part), allowing the effective collection of energy from solar light with a little heat loss.

If the width of the opening part 26 is five times greater the diameter of the focal point of the collected solar light, since the distribution in the radial direction of the collected solar light at the focal point can be considered to have the Gaussian distribution, the size of the opening part 26 is 5σ (where the diameter of the focal point is set to σ, the standard deviation of the Gaussian distribution), therefore most of the solar energy can be taken into the container part. Since the width of the opening part 26 is sufficiently wide, even if there is a fluctuation of the solar light due to winds or a blurriness of the focal point due to steam, the solar energy can be sufficiently taken into the container part.

In addition, since the solar light dispersed by passing through the opening part 26 is absorbed and converted into heat by the light absorber 30 near the bottom of the heat-insulated water tank 20, the heating does not occur near the opening part 26 where the solar light is collected, reducing the heat loss. In particular, if the opening part 26 is a mere hole, the solar light can easily pass through near the opening part 26 where the solar light is collected, further reducing the heat loss.

By maximizing the incoming solar light and minimizing the loss as much as possible, the solar heat collecting apparatus 1 can efficiently have the medium or liquid reach a high temperature with the solar light. In addition, in the desalination by the evaporation process, a high temperature required for the efficient evaporation can be achieved with small costs and a significant reduction in the heat loss by maximizing the incoming solar light and minimizing the loss as much as possible. Furthermore, the solar heat collecting apparatus 1 can generate a high temperature medium by efficiently absorbing the solar light and suppressing the loss due to radiation and convection etc., allowing to provide an apparatus that can produce hot water or a high temperature medium for households, agriculture and industries.

A general method for obtaining hot water from the sun is to produce a high temperature medium by leading the solar light through transparent glass or plastic so that this light hits and heats an absorber. However, the loss due to radiation and convection from the high temperature part becomes very large as the temperature gets higher. Therefore there was a limitation on the temperature that can be efficiently achieved by the solar light.

In the case of solar heating desalination apparatus, the higher the temperature reaches, the better the efficiency becomes. However, since the loss increases as the temperature increases, the optimum temperature is comparatively low. Therefore a vacuum apparatus is required for facilitating the evaporation, making the apparatus expensive.

Furthermore, in order to prevent such a loss, the water heater for households or businesses is provided with various arrangements at the heat absorbing part, or is required for a technique of heating water while the water goes through the pipe, etc., making the apparatus expansive.

Moreover, although it has been said that the water shortage will affect 3 billion people by 2025, if the desalination is done by reverse osmosis membrane, it will require an electric power of 9 trillion kWh. This will be 50% or more of the electric power usage of the entire world, 16 trillion kWh in 2002. Therefore a desalination apparatus that uses the solar light has been sought; however, its practical application has been difficult in terms of its efficiency and price.

Next, a calculation example is described.

Fig. 4 shows a diagram that indicates the radiant heat loss and the amount of heated water for temperatures, wherein the calculation results of the increases in radiation and convective loss are shown for temperatures.

Although the solar light in our county is 1 kW/ m² at the maximum, it is often a half of this even on a sunny day. Therefore, the radiation loss becomes the same as the solar light at the temperature of around 90 degrees C. Since the radiation loss is proportional to the radiation area, this loss can be reduced by making the area of the opening part smaller than the area where the solar light enters. The figure shows that the amount of water that can increase its temperature by 10 degrees C with an input from which the radiation loss is subtracted, when the solar light of 1 kW enters. If the opening part has the same area as that of the entrance plane, it shows that the water cannot go beyond 90 degrees C. In contrast, if the opening area is reduced to one tenth, it shows that the same hot water amount can be maintained in any temperature range.

### (EMBODIMENT 2)

Next, the solar heat collecting apparatus regarding the second embodiment according to the present invention is described.

First, the schematic configuration of the solar heat collecting apparatus regarding the second embodiment is described with reference to the figure. Like symbols are used for like or the corresponding parts as the first embodiment, and only different configurations and functions are described. It shall be likewise for other embodiments and alternative examples.

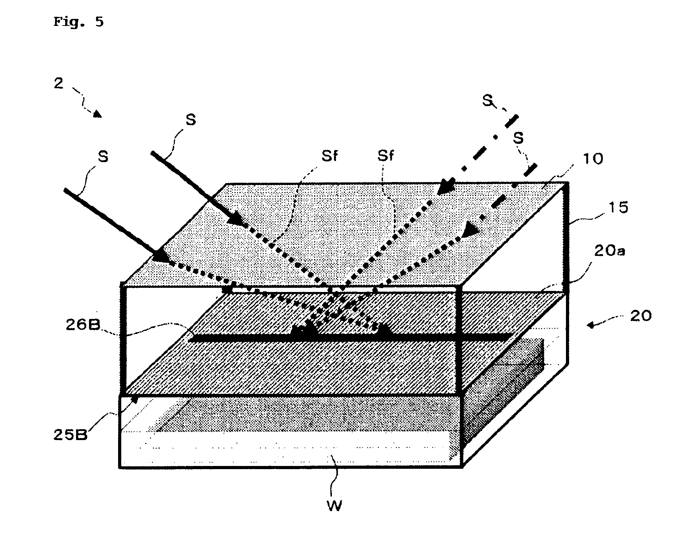

Fig. 5 shows a schematic diagram that illustrates a schematic configuration example of the solar heat collecting apparatus regarding the second embodiment according to the present invention, and also shows a schematic diagram of the solar heat collecting apparatus that addresses the diurnal motion of the sun. Furthermore, Fig. 5 indicates the arrangement that considers the diurnal motion of the sun.

As shown in Fig. 5, the solar heat collecting apparatus 2 has a visor 25B and slit 26B (an example of the opening part) different from those of the first embodiment.

Although the visor 25B just like the visor 25 of the first embodiment closes the upper part 20a of the heat-insulated water tank 20, it is formed into a long and narrow slit 26B.

The slit 26B has a width just about the same as or slightly wilder than the diameter of the focal point of the collected solar light Sf, and has a length that can sufficiently absorb the effect of the diurnal motion of the sun. The width of the slit 26B is set to be wider than the size of the solar light at the focal length of the solar light collected by the Fresnel lens 10 in consideration of the fluctuation of the solar light due to winds or the scattering of the solar light due to steam or dust. The length of the slit 26B is set to a length that can accept the solar light from angles with a degree that does not weaken the intensity of the solar light due to the incident angle of the solar light slanted by the diurnal motion of the solar light. Furthermore, the width and length of the slit 26B is determined in consideration of the heat loss.

Here, if the Fresnel lens 10 is 50 cm and the diameter of the focal point is about 1 cm, the width of the slit 26B is about 5 cm in diameter. If the diameter of the focal point is set to σ, the standard deviation of the Gaussian distribution, the width of the slit 26B is 5σ. The length of the slit 26B is about the longitudinal width of the visor 25B, and it is made as long as possible so that the solar light with an incident angle significantly slanted by the diurnal motion can be taken in.

The solar heat collecting apparatus 2 is installed so that the longitudinal direction of the slit 26B aligns with the direction of east and west. When the sun comes down and the solar light enters the slit 26B from a slanting direction, the solar light passed through the Fresnel lens 10 is most collected above the visor 25, and thus the Fresnel lens 10 may be up and down in accordance with the diurnal motion. That means, the Fresnel lens 10 is provided with a far-to-near means for moving the Fresnel lens 10 close to and far away from the slit 26B in accordance with the diurnal motion of the sun. Specifically, as the solar light slants, the far-to-near means moves the Fresnel lens 10 close to the slit 26B.

In this manner, the opening part has the slit 26B. In addition, a lens or mirror such as the Fresnel lens 10 is used for collecting the light, and the slit 26B is provided as an example of the opening part that can correspond to the movement of the light collecting part which varies in accordance with the diurnal motion of the sun.

Next, an example of the operation of the solar heat collecting apparatus 2 is described.

When the sun moves from west to east, the light slantingly enters the Fresnel lens; and the focal position moves to the opposite side of the sun. Since this movement is linear throughout the day, the slit 26B as shown in Fig. 5 is placed at the upper part of the box so that the focal point that moves in accordance with the diurnal motion is designed to move within this slit 26B.

As described above, according to this embodiment, the solar heat collecting apparatus 2 is arranged so that the longitudinal direction of the slit 26B aligns with the direction of the diurnal motion of the sun, thereby the collected solar light Sf can be taken into the heat-insulated water tank (container part) 20 without the tracking means that tracks the diurnal motion of the sun, allowing the efficient collection of energy from solar light. In addition, it is easy to set the area ratio of the solar light receiving surface (upper part 20a) to the opening area of the slit 26B to 10 or more, thereby the heat loss can be set to 1/10 or less.

Next, the first alternative example of this embodiment is described.

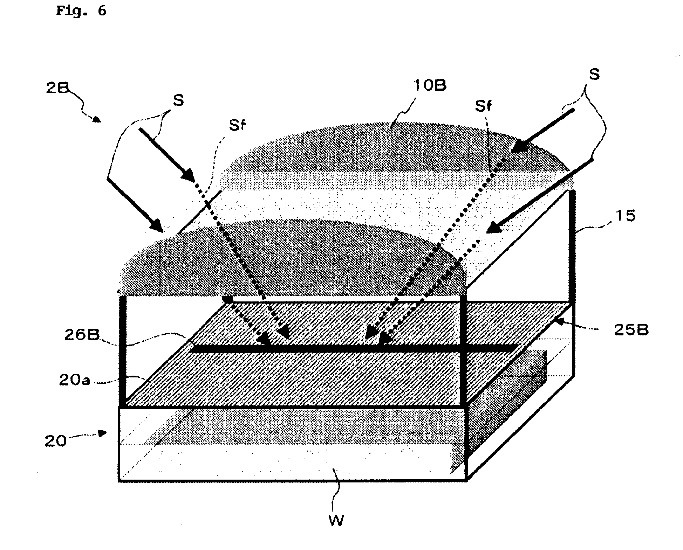

Fig. 6 shows a schematic diagram that illustrates a schematic configuration example of the first alternative example of the solar heat collecting apparatus 2, and also shows a schematic diagram of the solar heat collecting apparatus that uses a fisheye Fresnel lens for a fixed focal point.

As shown in Fig. 6, the fisheye Fresnel lens for a fixed focal point 10B of the solar heat collecting apparatus 2B has a structure that can comprise a curved lens or mirror etc. in order to minimize the opening part.

Fig. 6 is an example that is designed to keep the focal point at the same position at all times by curving the Fresnel lens itself so that the focal position does not move. For example, it can be created by curving a thin and flat Fresnel lens from side to side. In this method, the Fresnel lens 10B is similar to the fisheye lens, allowing the design of the Fresnel lens tailored to the fisheye lens specification so that the solar light can be collected from a wide range of angles. A lens that uses water can be used as the Fresnel lens 10B.

As described above, since the light collecting means is the Fresnel lens 10B that curves concave towards the opening part 26, the solar light can be collected from a wide range of angles.

Next, the second alternative example of this embodiment is described.

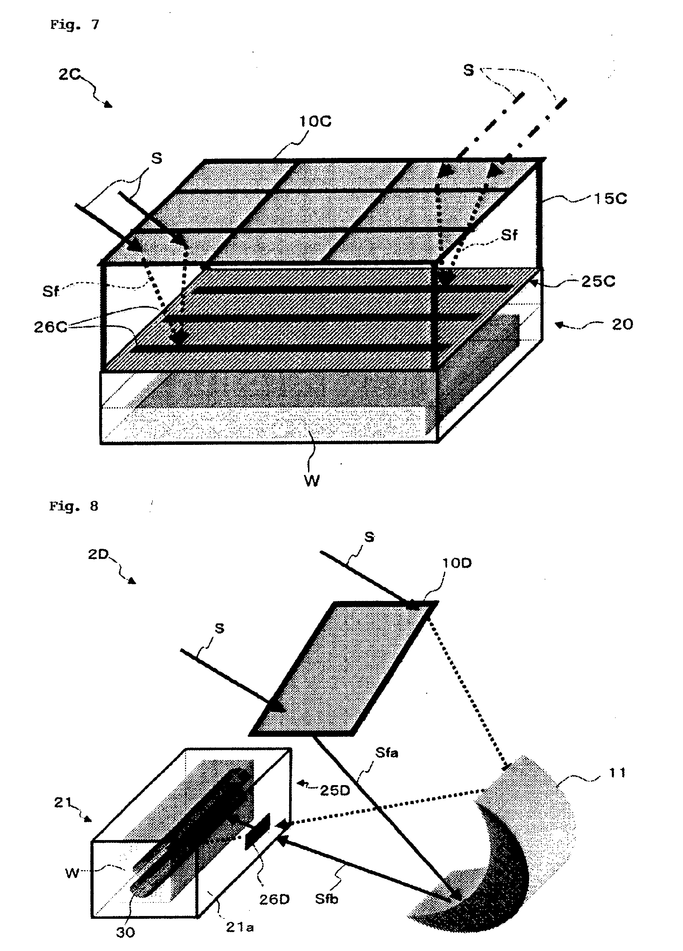

Fig. 7 shows a schematic diagram that illustrates a schematic configuration example of the second alternative example of the solar heat collecting apparatus 2, and also shows a schematic diagram of the solar heat collecting apparatus that aligns an array of Fresnel lenses.

As shown in Fig. 7, the solar heat collecting apparatus 2C comprises a Fresnel lens 10C in which small Fresnel lenses are placed in a grid pattern of 3 (length) x 3 (width), a visor 25C with a plurality of opening parts, and a plurality of slits 26C as the opening parts. For example, the Fresnel lens 10C is formed with a number of small light collectors such as lenses or mirrors etc. in order to minimize the height of the apparatus; and each small light collector has the slit 26C as a similar opening part that keeps up with the solar light.

As shown in Fig. 7, in order to limit the height of the apparatus as well as to make the manufacturing of the apparatus inexpensive, small light collecting apparatuses are aligned in parallel, and each apparatus is provided with a slit-like opening part that predicts the movement of the solar light.

Here, the slit-like opening part that predicts the movement of the solar light is an opening part with a slit along the path of the movement of the light collecting point of the sun in accordance with the diurnal motion and annual motion of the sun. The width of each slit 26C is 5 cm, and the length of the slit 26C is about the longitudinal width of the visor 25C. The length of the slit 26C is up to the area adjacent to the small Fresnel lens in the Fresnel lens 10C.

Next, the third alternative example of this embodiment is described.
Fig. 8 shows a schematic diagram that illustrates a schematic configuration example of the third alternative example of the solar heat collecting apparatus 2, and also shows a schematic diagram of the reflective solar heat collecting apparatus.

As shown in Fig. 8, the solar heat collecting apparatus 2D comprises a reflector plate (for example, concave mirror) 11 that reflects the solar light Sfa collected by a Fresnel lens 10D, a container 21 with a light absorber 30 and water W, a closed part 25D that closes the side 21a of the container 21, a slit (window pinhole) 26D that is formed in the closed part 25D and can accept the solar light Sfb from the reflector plate 11. Although the light can be inflected for the slit-type opening part by providing a reflector plate as shown in Fig. 8, various alternatives of those can also be considered.

Next, the fourth alternative example of this embodiment is described.

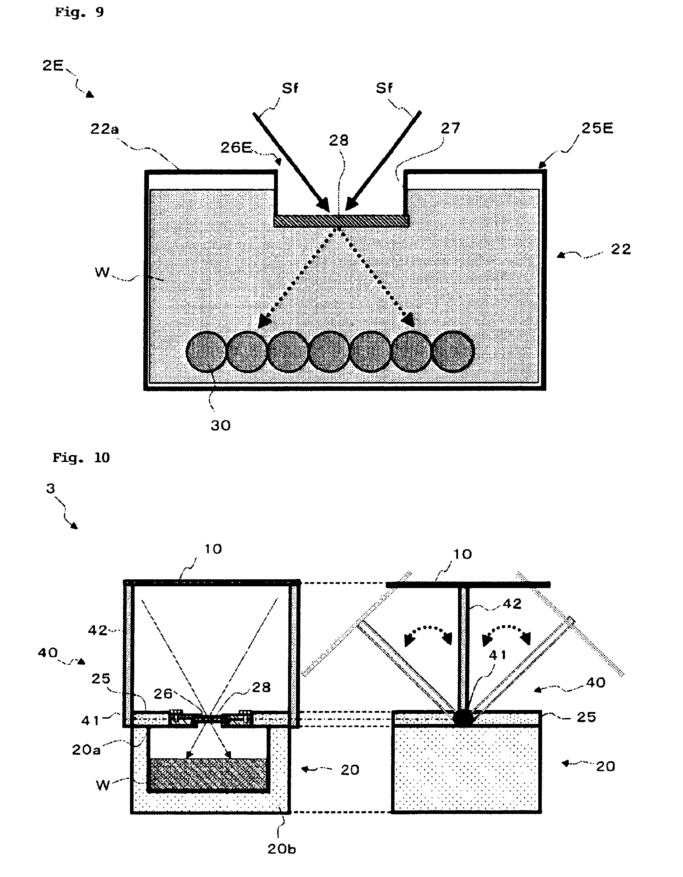

Fig. 9 shows a schematic diagram that illustrates a schematic configuration example of the fourth alternative example of the solar heat collecting apparatus 2. Fig. 9 has a structure with the opening part wherein the transparent plate that could have been fogged by the evaporation from the liquid surface at a high temperature is submerged in the liquid, showing a schematic diagram of the solar heat collecting apparatus with a structure not contacting with the steam.

As shown in Fig. 9, the solar heat collecting apparatus 2E comprises a visor 25E as an example of the closed part so that the upper part 22a of the container 22 is closed. The visor 25E has a depressed part 27, and the opening part 26E is formed by window glass 28 as an example of the transparent material that lets the solar light through to the bottom of the depressed part 27.

When heating the liquid, steam is generated and attaches to the transparent plate (window glass 28) of the opening part 26E, scattering the incoming solar light. Fig. 9 shows an example of the apparatus to prevent this. Submerging the opening part 26E as shown in the figure can prevent the steam from attaching. In the prior art, submerging the window causes the attachment of salt content or dirt, making it difficult for the light to enter, however, if the light is collected as shown in this technique so that the intensity is increased, the attached substances can be dissolved and thus removed. For example, in the case of salt content, it melts at 800 degrees C or higher, and therefore, if quartz glass with the softening point of 1650 degrees C is used for the window glass 28, the salt content can be removed without melting the window glass 28. This melting is performed, for example, when the water fills only a part of the container and does not completely fill up, and when the water W does not touch the window glass 28. The light collecting means brings the solar-light-concentrated focal point near the window glass 28, thereby the temperature of the window glass 28 becomes high, melting the salt content etc. Although the intensity of the solar light is increased by the maximum light collection near the window glass 28, since it is re-dispersed and then reaches the light absorber 30 after passing through the focal point, the light absorber 30 will not be damaged.

As described above, the solar heat collecting apparatus 2E comprises the light collecting part (Fresnel lens 10 etc.) that achieves a high light intensity at the degree that even when the dirt or salt content in the water attaches to the submerged opening part 26E and blocks the incoming solar light, the solar light can be converged so that the attached substances can be melted; and the opening part 26E with a size in conformity to the light collecting part.

As above, when the closed part has the depressed part 27, and the opening part 26E is formed with a transparent material that lets the solar light through to the bottom of the depressed part 27, the inside of the container 22 is filled up with a medium such as water to submerge the opening part 26E, thereby preventing the steam from attaching so that the solar light can easily get inside the container 22, allowing more efficient collection of energy from solar light.

Conventionally, when the water is directly heated by the solar light, the window glass is fogged by the generated steam, thus scattering the light, thereby the solar light cannot enter the medium and heating is interfered, and therefore the water is sealed inside a steel pipe and the water can only be heated by the solar light indirectly from the outside of this pipe. In addition, when the inside of the container is filled up with water in order to prevent the steam, there were problems of damaging the container due to the high pressure at a high temperature and of blocking the light due to the dirt or salt content attached to the window glass. These problems can also be solved by the solar heat collecting apparatus 2E.

If the opening part 26E is not submerged, the solar heat collecting apparatus 2E may have the opening part of no more than a simple hole with a size that can sufficiently prevent the loss, instead of using a window material (window glass 28). In this case, the incoming solar light will not be interfered by foggy window glass 28, since there is no window glass 28.

By collecting the solar light with the Fresnel lens 10, a sufficient high temperature can be generated for sterilization and the prevention of the hatching of eggs of creatures; and in the case of the desalination of sea water, it can prevent the apparatus from being blocked, since eggs of shellfish etc. may be taken into the apparatus along with the sea water and grow to adult shellfish inside the apparatus.

### (EMBODIMENT 3)

Next, the solar heat collecting apparatus regarding the third embodiment according to the present invention is described.

Fig. 10 shows a schematic diagram that illustrates a schematic configuration example of the solar heat collecting apparatus regarding the third embodiment according to the present invention. Fig. 10 also shows the principle of the means to solve the problem etc. of having less amount of solar light that enters the lens as the solar light comes down to the direction of the horizon.

As shown in Fig. 10, the solar heat collecting apparatus 3, in contrast to the solar heat collecting apparatus 1 of Fig. 1, comprises the tracking means 40 that tracks the sun in accordance with the movement of the sun.

The tracking means 40 has a rotation axis (for example, diurnal motion adjusting axis) 41, and arms 42 that are rotatably installed at the rotation axis 41.
The rotation axis 41 is positioned on the side of the upper part of the heat-insulated water tank 20.

The arms 42 have a rod shape, and the base end part of the arm 42 is rotatably connected to the rotation axis 41 while the apical part of the arm 42 is fixed to the Fresnel lens 10.

The Fresnel lens 10 is fixed to the arms 42 on both sides. The apical part of the arm 42 to which the Fresnel lens 10 is fixed draws a circle about the axis on the light collecting point. By moving along this circle, the Fresnel lens moves perpendicularly to the line connecting the focal point and the sun. These arms 42 are configured to be rotated by a belt or rod etc. operated by a small motor (not shown).

As described above, the solar heat collecting apparatus 3 is configured by comprising an apparatus for tracking the sun (tracking means) and the heating part (light absorbing part) for creating a high temperature medium by letting the collected solar light through the opening part. It also has a small opening part 26 that lets the solar light collected by the Fresnel lens 10 through; and the other part forms a heat-insulating wall 20b that stops the heat from escaping (partially forming a visor 25), configuring the highly efficient solar heat collecting apparatus 3 which can efficiently make the medium sealed inside (water W) have a high temperature and can store it for a long time.

Next, the tracking means 40 including the driving part is described with reference to figures.

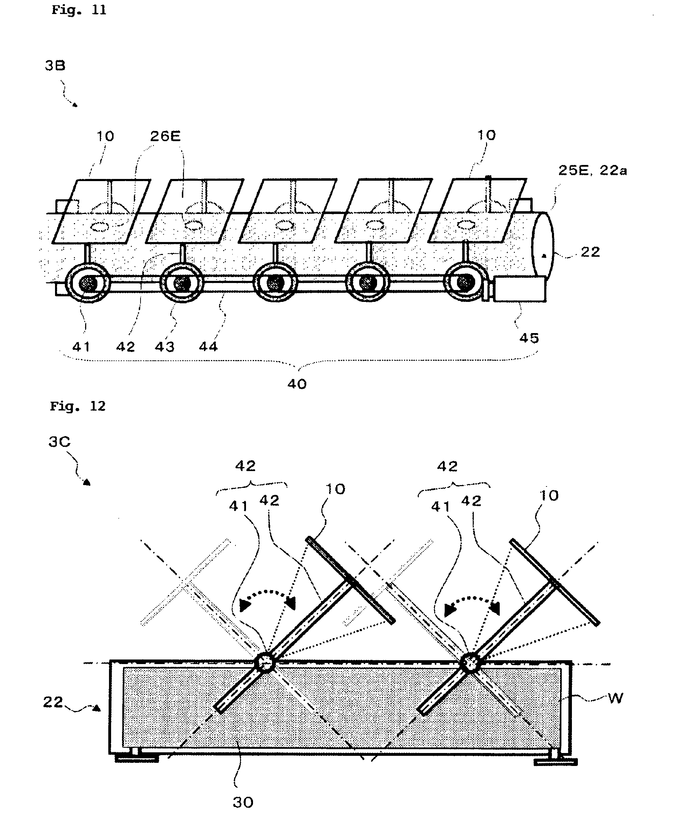

Fig. 11 shows a schematic diagram that illustrates an example of the tracking means of the solar heat collecting apparatus. Fig. 11 also shows a schematic diagram of the solar heat collecting apparatus that illustrates an example of the embodiment of the efficient solar heat collecting apparatus comprising a driving part that can move the lens for tracking in accordance with the diurnal motion and annual motion of the sun, and illustrates an embodiment of the solar heat collecting apparatus that uses the principle shown in Fig. 10.

Since the solar heat collecting apparatus 3B has a configuration more or less different from the solar heat collecting apparatus 3 of Fig. 10, a configuration example of the solar heat collecting apparatus, 3B is first described below.

As shown in Fig. 11, the solar heat collecting apparatus 3B comprises a plurality of Fresnel lenses 10, a cylindrical heat-insulated water tank 22, and the tracking means 40, etc.

Each Fresnel lens 10 is respectively supported by two arms 42, and rotates about the rotation axis (diurnal motion adjusting axis or annual motion adjusting axis) 41.

The upper part 22a of the heat-insulated water tank 22 has a function as the visor 25E. A plurality of opening parts 26E is formed in the upper part 22a (visor 25E) corresponding to each Fresnel lens 10. That means, the solar heat collecting apparatus 3B comprises a container with a heat-insulating wall (heat-insulated water tank 22), which is provided with a small opening part 26E for letting the solar light through; and the solar light that has entered through the hole in the opening part 26E heats the water inside the heat-insulated water tank (box) 22 up to a high temperature.

Next, the tracking means 40 comprises a motor (driving part) 45 that can move the lenses (Fresnel lens 10) for tracking in accordance with the diurnal motion and annual motion of the sun. The tracking means 40 comprises circular rotating parts (wheel 43) for tracking the diurnal motion; and the rotating part is fixed to the Fresnel lens 10 and is rotated by a belt 44 etc. so that the lens can be rotated while it is configured so that the focal point does not shift by the rotation. Furthermore, as shown in Fig. 11, a number of wheels 43 are rotated by a single belt 44.

The tracking means 40 is provided above the heat-insulated water tank 22 and has a rotation axis to rotate the Fresnel lens 10, while the opening part 26E is positioned on the rotation axis.

As described above, this embodiment allows the absorption of the change in the slanting of the solar light due to the diurnal motion and annual motion of the sun by the tracking means 40, thereby the solar light can easily get inside the container part (heat-insulated water tank 22), and thus the solar heat collecting apparatus 3 can efficiently collect energy from solar light.

When the opening part 26E is positioned on the rotation axis 41, even if the Fresnel lens 10 is rotated by the tracking means 40, the focal point of the Fresnel lens 10 can be positioned near the opening part 26E, therefore the solar light is less likely to get out from the opening part 26E even if tracking for the diurnal motion and annual motion of the sun, thereby the solar light can easily get inside the container part (heat-insulated water tank 22), allowing the efficient collection of energy from solar light.

When the tracking means 40 moves the light collecting means with reference to the container part, particularly when the light collecting means is a Fresnel lens made of plastic, less power is required for operating the tracking means.

Besides, the solar light is collected by a lens such as the Fresnel lens 10 or a mirror, and is lead into a box through the small opening part 26 etc. at the upper part of the box (heat-insulated water tank) 20. The solar light that has passed the opening part is re-dispersed inside the box and heats the absorber (light absorber) 30 inside it. Although the temperature of the inside becomes high, since the radiation loss is proportional to the opening area, the smaller the opening part is, the smaller the radiation loss becomes. However, if the system has the lenses and opening parts that are fixed like these, as the solar light comes down to the direction of the horizon, the amount of the solar light that enters the lenses becomes less. Furthermore, when the incoming sun significantly slants, the solar light enters the lens from a slanting direction, thereby the amount of the incoming solar light per unit area becomes less while the focal length varies, making it difficult to tailor the opening part for the focal point of the light collecting means. In the case of this embodiment, the solar light that slantingly enters can be efficiently collected.

In addition, this embodiment can generate a high temperature medium by efficiently absorbing the solar light and suppressing the loss due to radiation and convection etc., allowing to provide an apparatus that can produce hot water or a high temperature medium for households, agriculture and industries and thus allowing to perform power generation and water purification. That means, the high temperature hot water generated by the solar heat collecting apparatus 3 can be used as a heating source to achieve a complex solar heat utilization system that drives the desalination apparatus, cooling apparatus and power generation apparatus.

If this embodiment can store the high temperature hot water for a long time, a temperature difference power generation becomes possible by using the hot water, allowing a highly efficient power generation with small costs, instead of the solar light power generation which currently relies only on solar cells.

Next, another example of the tracking means of the solar heat collecting apparatus is described.
Fig. 12 shows a schematic diagram that illustrates another example of the tracking means of Fig. 11. Fig. 12 shows a schematic diagram of the solar heat collecting apparatus that illustrates an example of the embodiment of the tracking apparatus, comprising circumferential rotating parts for tracking the diurnal motion; and the rotating part is fixed to the Fresnel lens and is rotated by a belt etc. so that the lens can be rotated while it is configured so that the focal point does not shift by the rotation.

As shown in Fig. 12, a number of arms 42 are connected to a single rod (not shown), and the rotation about the rotation axis 41 such as the diurnal motion adjusting axis can be given by the motion of the rod in the horizontal direction.

The water W is stored inside the cylindrical heat-insulated water tank 22 and the light absorber 30 is placed at the bottom of the heat-insulated water tank 22. The rotation axis 41 of the tracking means 40 is provided above the heat-insulated water tank 22, and is positioned at the height of the opening part 26E.

Next, an alternative example of the solar heat collecting apparatus 3 is described with reference to figures.

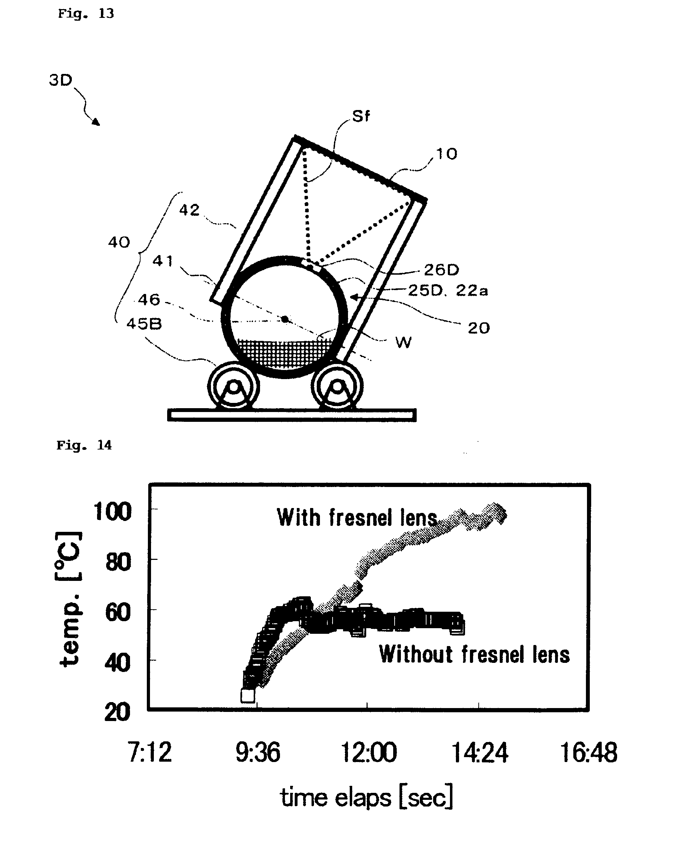

Fig. 13 shows a schematic diagram that illustrates a schematic configuration example of an alternative example of the solar heat collecting apparatus of Fig. 10. It also shows a schematic diagram of the solar heat collecting apparatus that illustrates an example of the embodiment of the tracking apparatus, wherein in order to track the annual motion, the base of the heat collecting apparatus is formed in a cylindrical shape so that the rotation about the axis of the cylinder is facilitated, allowing the tracking by this rotation.

As shown in Fig. 13, the solar heat collecting apparatus 3E comprises a Fresnel lens 10, a heat-insulated water tank 22 in which an opening part is formed at the upper part and has water W, and a tracking means 40.

The tracking means 40 has a motor 45B etc. that is connected to a rotation axis (diurnal motion adjusting axis) 41, a rotation axis (annual motion adjusting axis) 46, and a wheel. The cylindrical heat-insulated water tank 22 is supported by a plurality of wheels and is rotated on these wheels. This rotation axis 46 is the annual motion adjusting axis. The motor 45B rotates the heat-insulated water tank 22 about the rotation axis 46 in accordance with the annual motion of the sun. As described above, the tracking means 40 comprises a function of tracking for the annual motion by the slanting of the entire apparatus.

As shown in Fig. 13, the body of the heat collector (heat-insulated water tank 22) has a cylindrical shape; and the axis (rotation axis 46) to adjust the annual motion is provided in this cylindrical container in its axial direction, allowing to track the solar elevation by the rotation about the rotation axis 46 of this annual motion adjusting axis. Arms 42 that rotate the Fresnel lens are attached to the side wall of the cylindrical container (heat-insulated water tank 22) and the Fresnel lens 10 fixed to these arms 42 tracks the diurnal motion. The part including the arms 42 and the focal position moves along together with the rotation about the axis of the cylindrical container (rotation axis 41 of the diurnal motion adjusting axis), and the speed of the motor 45B is adjusted so that the focal point and the normal to the Fresnel lens 10 are aligned in a straight line towards the sun.

As described above, an alternative example of this embodiment can apply the tracking means 40 that moves a container such as the heat-insulated water tank 22 for the slow movement of the annual motion of the sun, thereby it can be separated from the tracking means of the diurnal motion of the sun, simplifying the mechanism of the tracking means 40.

Next, as an example of the light collecting means, a comparative example wherein the Fresnel lens is used and not used is described with reference to the experimental results.

Fig. 14 shows a diagram that illustrates an example of the temperature time characteristic wherein the heat of the solar light is collected into water by using the solar heat collecting apparatus of Fig. 10. Fig. 14 also shows the results wherein the solar light is let into a small hole opened in the heat-insulated container (heat-insulated water tank) while tracking the solar light.

The size of the container is 300 x 450 x 190 mm, and 2 liters of water is poured inside it. An acrylic Fresnel lens with the size of 50 cm in length and width is used. As shown in Fig. 14, if it is provided with a Fresnel lens, hot water at 100 degrees C can be obtained in approx. 5 hours.

In contrast, in the case of an ordinary method without a Fresnel lens wherein the upper side is covered with glass without light-collecting with a lens, the heating stops at around 60 degrees C. This indicates the advantageous effect of the present invention.

Although an ordinary heat insulating material is used in the experimental results shown in Fig. 14, if a calculation is made with an evacuated insulating material with the currently highest heat insulating performance having the heat conducting property of 0.002W/mK (made by Matsushita Electric Industrial Co., Ltd.), the results show that the hot water at 100 degrees C only comes down to 97 degrees C after 24 hours for a cylindrical tube with 50 cm in diameter that is half-filled with water. This is because, the opening part is vanishingly small compared to the entire apparatus, and thus the entire apparatus works just as a heat-insulated container. Therefore, when this apparatus is used, hot water at almost 100 degrees C can be supplied for 24 hours, and a power generation is possible with this hot water, indicating the possibility to operate a desalination apparatus with this water even during the night time without the sun.

Furthermore, if the Fresnel lens used in the experiment shown in Fig. 14 is optimized and a container with a higher heat insulating performance is used, 80% of the solar light can be used for hot water. With this 100 degrees C hot water as a heat source, a power generation that uses the solar light is possible by using a power generating apparatus based on the Rankine cycle that uses a working fluid such as ammonia etc. that evaporates at a low temperature. According to a trial calculation, the generating efficiency in the Rankine cycle generation at near 100 degrees C is about 10%. Even if the hot water utilization efficiency from the solar light is taken into consideration, it shows that it can reach 8%. In addition, the power generation becomes possible during the day and night by storing the hot water, showing the possibility of realizing a solar power generator that significantly outperforms solar cells.

As described above, a highly efficient solar heat collecting apparatus that can store the solar light for 24 hours can be realized by storing hot water heated up to a high temperature with a heat-insulating wall. The high temperature hot water can be used as a heating source to realize a complex solar heat utilization system that drives the desalination apparatus, cooling apparatus and power generation apparatus.

### (EMBODIMENT 4)

Next, the solar beat collecting apparatus regarding the fourth embodiment according to the present invention is described.

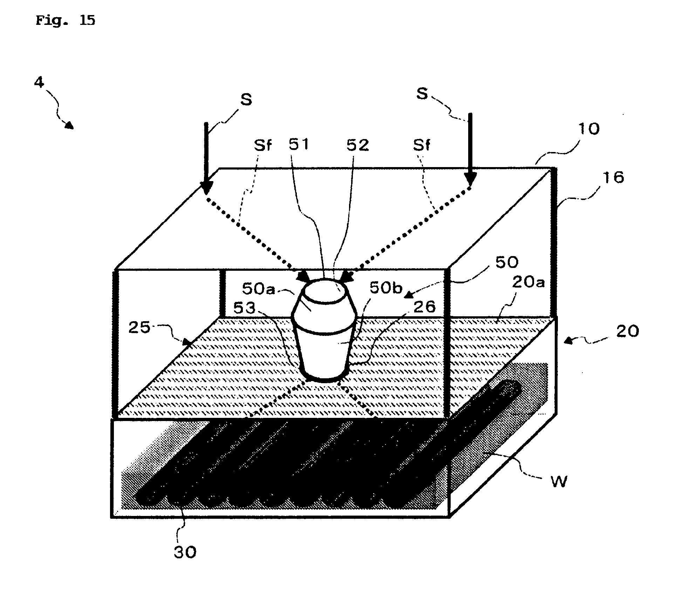

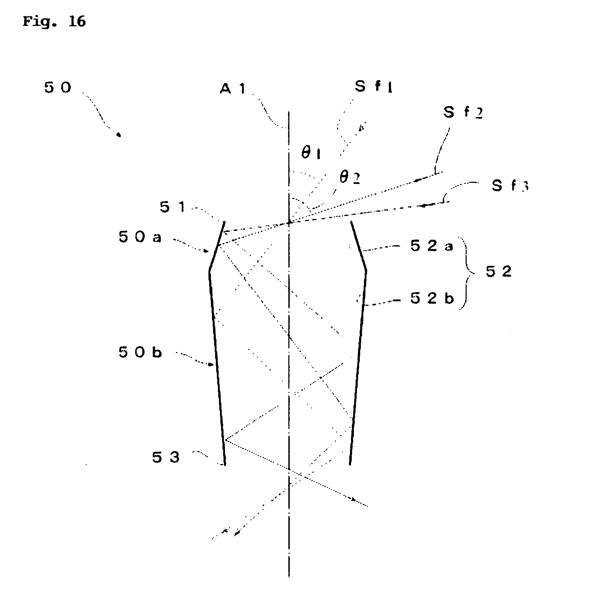

Fig. 15 shows a schematic diagram that illustrates a schematic configuration example of the solar heat collecting apparatus regarding the fourth embodiment according to the present invention. Fig. 16 shows a schematic diagram that illustrates an example of the optical path in the light guide of the solar heat collecting apparatus of Fig. 15.

As shown in Fig. 15, the solar heat collecting apparatus 4, in contrast to the solar heat collecting apparatus 1 in Fig. 1, further comprises a light guide 50 placed at the opening part.

The light guide 50 comprises an entrance part 51 from which the solar light that is collected by the Fresnel lens 10 enters, a reflection surface 52 that reflects the solar light and leads it into the heat-insulated water tank 20, and an exit part 53 that outputs the solar light into the heat-insulated water tank 20. The light guide 50 has a shape similar to a barrel, and is composed of an upper part 50a and a lower part 50b. Although the width of the light guide 50 once widens in the upper part 50a, the lower part 50b narrows down towards near the opening part.

As described above, the light guide 50 gradually widens in the upper part 50a from the entrance part 51 towards the exit part 53. The light guide 50 also gradually widens in the lower part 50b from the exit part 53 towards the entrance part 51.

The entrance part 51 is formed at the top of the upper part 50a and has a circular shape. As shown in Fig. 16, the reflection surface 52 has a reflection surface 52a that extends from the entrance part 51 to the outside of the axis A1, and the reflection surface 52b that extends from the exit part 53 to the outside of the axis A1.

The reflection surface 52a is formed in the inner surface of the upper part 50a of the light guide 50, and it has a function to lead the solar light with a large incident angle with reference to the light guide 50 inside the heat-insulated water tank 20 with less number of reflections in the reflection surface 52. The reflection surface 52b is formed in the inner surface of the lower part 50b of the light guide 50.

The exit part 53 is formed at the lower end of the lower part 50b and has a size that allows the connection with the circular opening part 26. The shape of the entrance part 51 and exit part 53 is not limited to a circular shape, and it may be an elliptical shape or a polygonal shape such as square or triangle.

The angle of the reflection surface 52b with reference to the line (axis A1) extended perpendicularly to the opening part 26 is comparatively smaller than the angle of the reflection surface 52a with reference to the axis A1. By facing the reflection surface 52a downward to provide a large angle of the reflection surface 52a, the solar light with a large incident angle can be easily lead inside the heat-insulated water tank 20. In contrast, since the surface of the reflection surface 52b faces upward, its angle is better to be smaller so that the solar light can be easily lead into the heat-insulated water tank 20. The angle of the reflection surface 52b also depends on the size of the opening part 26, and how to design the size of the entire solar heat collecting apparatus 4 including how to arrange the Fresnel lens 10. In order to meet the above requirements, the upper part 50a becomes shorter than the lower part 50b.

The shape of the light guide 50 is not limited to symmetrical with reference to the central axis of the axis A1; and even if it is asymmetrical, the light guide 50 gradually widens in the upper part 50a from the entrance part 51 towards the exit part 53. It is acceptable if the light guide 50 has a shape in which the lower part 50b gradually widens from the exit part 53 towards the entrance part 51.

In contrast to the solar heat collecting apparatus 1, the Fresnel lens 10 is installed the same height as the light guide 50 above the heat-insulated water tank 20 supported by four supporting members 16. Therefore, the focal position of the Fresnel lens 10 is positioned near the entrance part 51.

Next, the light path in the light guide 50 is described with reference to figures.

As shown in Fig. 16, the solar light Sf1 with the incident angle θ1 (small incident angle) with reference to the light guide 50, is lead into the heat-insulated water tank 20 through the reflection by the reflection surface 52b. The solar light Sf2 with the incident angle θ2 (large incident angle) just like the sun coming down, is once reflected downwards by the reflection surface 52a, then is reflected on the reflection surface 52b, and is lead into the heat-insulated water tank 20. Since it is reflected further downwards, that means, the incident angle with reference to the reflection surface 52a becomes large, the reflection angle with reference to the reflection surface 52a also becomes large, thus leading the solar light with less number of reflections before reaching the exit part 53.

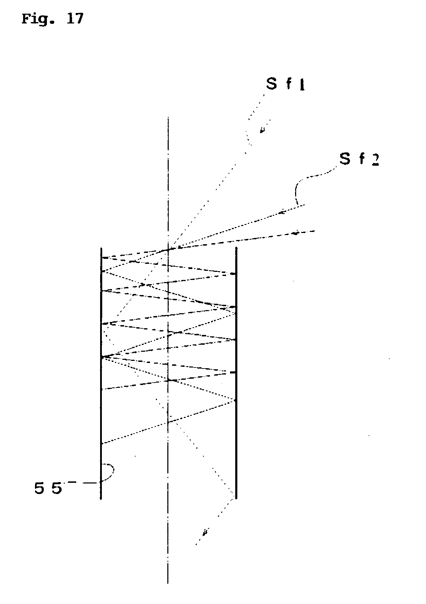

In comparison with the case of Fig. 17 that illustrates an example of the light path in the light guide of the comparative example, the intensity of the solar light Sf2, as shown in Fig. 17, is attenuated as it is repeatedly reflected on the reflection surface 55. In contrast, as shown in Fig. 16, the solar light Sf2 has less number of reflections due to the effect of the reflection surface 52a in comparison with the case of the reflection surface 55. In the case of the solar light Sf3 with an even larger incident angle, it is lead into the heat-insulated water tank 20 with three reflections.

Here, if the reflectance of one reflection in the reflection surface 52 is 90%, since three reflections cause the reduction of the solar light intensity to 73%, and thus the number of reflections is better to be smaller.

As described above, according to this embodiment, by comprising the light guide 50 that is placed at the opening part 26 and has the reflection surface 52 reflecting and leading the solar light into the heat-insulated water tank 20 (container part), the solar light is easily lead into the container part through the reflections in the reflection surface 52 of the light guide 50, allowing the efficient collection of energy from solar light, even if the collected solar light slantingly enters the opening part 26 etc., or if the focal position of the collected solar light shifts. In addition, since the opening part 26 is not directly exposed to the open air, the internal heat is less likely to escape and thus the heat loss is reduced.

In addition, the light guide 50 has the entrance part 51 of the solar light, and the reflection surface 52a extends from the entrance part 51 to the outside, thereby when the collected solar light slantingly enters the opening part 26, the solar light reflected on the reflection surface 52a faces the opening part 26 due to the reflection surface 52a extending from the entrance part 51 to the outside, and thus it is easily lead into the container part, allowing the efficient collection of energy from solar light.

In addition, since the light guide 50 has the exit part 53 that outputs the solar light into the heat-insulated water tank 20, and the reflection surface 52b extends from the exit part 53 to the outside; the width of the light guide 50 is once widened due to the reflection surface 52 (52a) extending from the entrance part to the outside, however, along the way, the reflection surface 52 (52b) extends from the exit part to the outside, and thus the width of the light guide 50 narrows down near the opening part 26. Therefore, the opening part 26 can be made smaller so that the solar light can easily enter and the heat does not escape from the inside of the heat-insulated water tank 20, allowing the efficient collection of energy from solar light with a little heat loss.

### (EMBODIMENT 5)

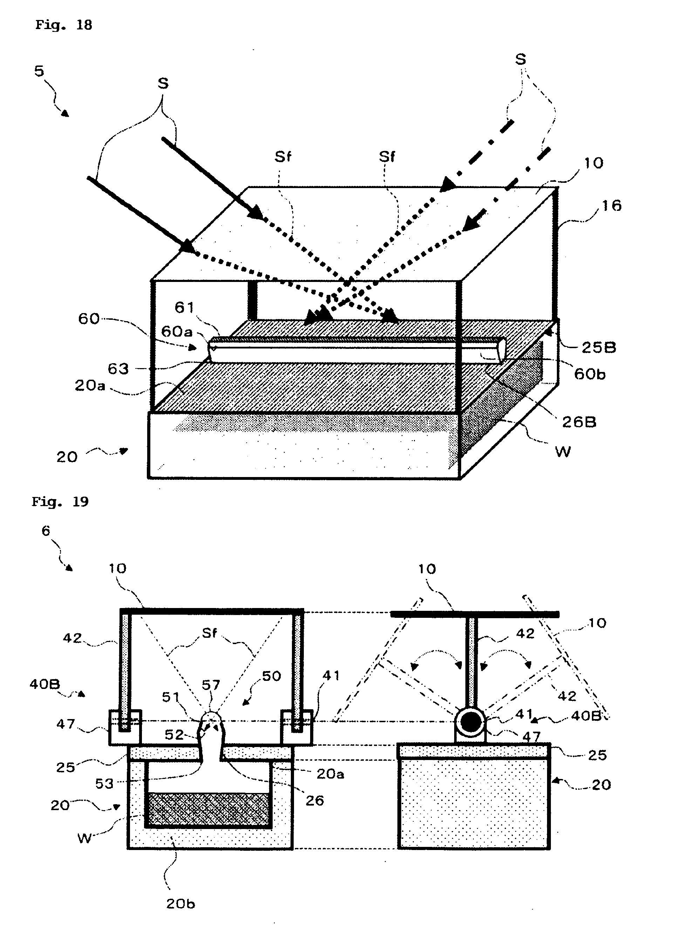

Next, the solar heat collecting apparatus regarding the fifth embodiment according to the present invention is described. Fig. 18 shows a schematic diagram that illustrates a schematic configuration example of the solar heat collecting apparatus regarding the fifth embodiment according to the present invention.

As shown in Fig. 18, the solar heat collecting apparatus 5, in contrast to the solar heat collecting apparatus 2 in Fig. 5, is further provided with a light guide 60 placed at the slit 26B.

Just like the light guide 50, the light guide 60 has an entrance part 61, a reflection surface (not shown) that leads into the heat-insulated water tank 20, and an exit part 63, and is composed of an upper part 60a and a lower part 60b. The entrance part 61 has a long and narrow rectangular shape that can absorb the movement of the diurnal motion etc. of the solar light. The exit part 63 has a size that allows the connection with the slit 26B. The cross-sectional shape of the light guide 60 is the same as the shape shown in Fig. 16; and the width of the light guide 60 once widens in the upper part 60a, however, the lower part 60b narrows down towards near the opening part. Instead of the axis A1 of Fig. 16, a symmetrical plane is assumed.

As described above, the light guide 60 gradually widens in the upper part 60a from the entrance part 61 towards the exit part 63. The light guide 60 also gradually widens in the lower part 60b from the exit part 63 towards the entrance part 61.

If the opening part absorbs the movement of the diurnal motion by the slit 26B, the light guide 60 can absorb the annual motion. If the focal length of the Fresnel lens 10 is reduced in order to downsize the solar heat collecting apparatus 5, the light guide 60 can easily lead the solar light S that has entered from the vicinity of the Fresnel lens 10 into the heat-insulated water tank 20.

### (EMBODIMENT 6)

Next, the solar heat collecting apparatus regarding the sixth embodiment according to the present invention is described.

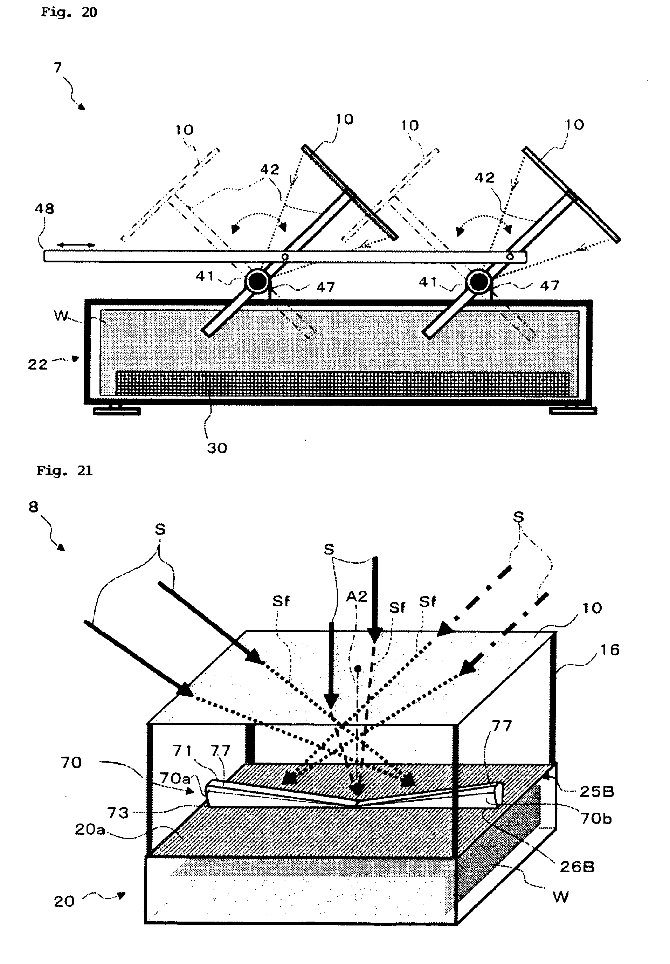

Fig. 19 shows a schematic diagram that illustrates a schematic configuration example of the solar heat collecting apparatus regarding the sixth embodiment according to the present invention. Fig. 20 shows a schematic diagram that illustrates an example of the tracking means of the solar heat collecting apparatus of Fig. 19.

As shown in Fig. 19, the solar heat collecting apparatus 6, in contrast to the solar heat collecting apparatus 3 in Fig. 10, further comprises a light guide 50 placed at the opening part 26.

The difference from the solar heat collecting apparatus 3 is that, as shown in Fig. 19, the tracking means 40B has a rotation axis supporting member 47 and the rotation axis 41 of the tracking means 40B is provided outside the opening part 26 so that the focal point of the Fresnel lens 10 can be positioned at the entrance part 51 of the light guide 50. As described above, the tracking means 40B is provided outside the opening part 26, and also has the rotation axis 41 to rotate the Fresnel lens 10 (light collecting means) so that the entrance part 51 of the light guide 50 is positioned on the rotation axis 41.

In the solar heat collecting apparatus 6, the entrance part 51 of the light guide 50 is covered by a transparent hemispherical entrance window 57.

Furthermore, in the case of the tracking means 40B with a plurality of Fresnel lenses 10 as shown in the solar heat collecting apparatus 3C of Fig. 12, each rotation axis 41 is positioned at the height of the entrance part 51 with each rotation axis supporting member 47 as shown in Fig. 20.

Each arm 42 has a link mechanism formed by a rod 48, and each Fresnel lens 10 synchronously moves by sliding the rod 48.

As described above, according to this embodiment, the tracking means 40B is provided outside the opening part 26, and also has the rotation axis 41 to rotate the Fresnel lens 10 so that the entrance part 51 of the light guide is positioned on the rotation axis 41, thereby the focal point of the Fresnel lens 10 is positioned near the entrance part 51 of the light guide even though the Fresnel lens 10 is rotated about the rotation axis 41 by the tracking means 40B, and thus the solar light is less likely to get out the light guide when tracking the diurnal motion and annual motion of the sun, therefore the solar light can be easily let inside the heat-insulated water tank 20, allowing the efficient collection of energy from solar light.

Since there is a rotation axis 41 outside the opening part 26, even if the Fresnel lens 10 is significantly slanted, the Fresnel lens 10 is less likely to hit the upper part 25 of the heat-insulated water tank 20. Particularly when two or more light collecting means are aligned as shown in Fig. 20, it is advantageous.

When the entrance part 51 of the light guide 50 is further provided with a dome-shaped entrance window 57, the solar light enters as perpendicularly to the entrance window 57 as possible even if the solar light slants, thereby the reflection in the surface of the entrance window 57 is prevented. In addition, the entrance window 57 can prevent the diffusion of steam, thereby preventing the dissipation of heat. As described above, energy from solar light can be efficiently collected with a little heat loss.

### (EMBODIMENT 7)

Next, the solar heat collecting apparatus regarding the seventh embodiment according to the present invention is described.

Fig. 21 shows a schematic diagram that illustrates a schematic configuration example of the solar heat collecting apparatus regarding the seventh embodiment according to the present invention.
As shown in Fig. 21, the solar heat collecting apparatus 8, in contrast to the solar heat collecting apparatus 2 in Fig. 5, is further provided with a light guide 70 placed at the slit 26B. The light guide 70 is a variation of the light guide 60 in Fig. 18.

Just like the light guide 60, the light guide 70 has an entrance part 71, a reflection surface (not shown) that leads into the heat-insulated water tank 20, and an exit part 73, and is composed of an upper part 70a and a lower part 70b. The light guide 70, as shown in Fig. 21, has a central axis A2 as the center and is separated into left and right; and its height lowers at the central axis A2 and is gradually heightened as it goes to the ends. The height of the light guide 70 is determined in accordance with the focal position wherein the sun comes down and the solar light S enters the Fresnel lens 10 from a slanting direction.

The entrance part 71 has a long and narrow rectangular shape that can absorb the movement of the diurnal motion etc. of the solar light. However, as shown Fig. 21, when the solar light S enters the Fresnel lens 10 from a slanting direction, the focal position moves away from the opening part 26B to the direction of the central axis A2, and thus the plane of the entrance part 71 more or less slants towards the central axis A2. The entrance part 71 is blocked with window glass 77. The entrance part 71 may be curved in accordance with the focal position wherein the solar light S enters the Fresnel lens 10 from a slanting direction.

The exit part 73 has a size that allows the connection with the slit 26B. The cross-sectional shape of the light guide 70 is the same as the shape shown in Fig. 16; and the width of the light guide 70 once widens in the upper part 70a, however the lower part 70b narrows down towards near the opening part. However, as shown in Fig. 21, the width of the light guide 70 narrows as it goes towards the central axis A2, and there will be no width near the central axis A2.

As described above, in the case of this embodiment, the Fresnel lens 10 does not need to be provided with a far-to-near means for moving the Fresnel lens 10 close to and far away from the slit 26B in accordance with the diurnal motion of the sun.

The Fresnel lens 10 etc. as the light collecting means may be in a concentric pattern or in a linear pattern in order for the light collection just like that of a cylindrical lens.
The function of the light collecting means may be able to lead the solar light from the opening part into the container part in accordance with the shape or size of the entrance part etc. of the opening part or light guide.

Furthermore, the present invention is not limited to each embodiment described above. Each embodiment described above is an exemplification; and those with similar operational advantages by having practically the same configuration as the technical idea described in the claims of the present invention shall be included in the technical scope of the present invention whatsoever.

JPA 2008-120538 and JPA 2008-203940 are herein incorporated in its entirety by the reference thereto.

### INDUSTRIAL APPLICABILITY

The conventional method can only use the efficiency of 50% of the solar light even with hot water at 40 degrees C, and the efficiency at a high temperature is significantly reduced, however, according to the present invention, a heat collector with an efficiency of nearly 100% can be offered even at a high temperature of nearly 100 degrees C, and thus a wide range of application is expected including solar heating steam electric generation and solar heating desalination apparatus in addition to the use for solar water heater. In addition, since high temperature hot water can be efficiently produced, the high temperature hot water can be supplied to the desalination apparatus while the hot water ant nearly 100 degrees C is used for 24 hours to apply for turbine generator by the ammonia evaporation such as the Kalina cycle, possibly allowing a generating efficiency that outperforms solar cells.

### DESCRIPTION OF SYMBOLS

1, 2, 2B, 2C, 2D. 2E, 3 3B, 3C, 3D, 4, 5, 6, 7, 8: Solar heat collecting apparatus
10, 10B, 10C, 10D: Fresnel lens (light collecting means)
11 Reflection mirror (light collecting means)
20, 21, 22, 20D, 20E: Heat-insulated water tank (container part)
25, 25B, 25C, 25D, 25E: Visor (closed part)
26, 26E: Opening part
26B, 26C, 26D: Slit (opening part)
27: Depressed part
30: Light absorber (light absorbing part)
40, 40B: Tracking means
41, 46: Rotation axis
50, 60, 70: Light guide
51, 61, 71: Entrance part
53, 63, 73: Exit part
57: Entrance window
S: Solar light
Sf: Collected solar light

## Claims

1. A solar heat collecting apparatus, comprising:
an opened container part that accumulates heat,
a closed part that closes the container part and has an opening part to let the collected solar light in, and
a light absorbing part that absorbs the solar light dispersed by passing through the opening part so that it is converted into heat.

2. The solar heat collecting apparatus as claimed in Claim 1, wherein:
the opening part is provided with a slit.

3. The solar heat collecting apparatus as claimed in Claim 1 or Claim 2, wherein:
the width of the opening part is five times greater than the diameter of the focal point of the collected solar light.

4. The solar heat collecting apparatus as claimed in any one of Claim 1 to Claim 3, wherein:
further a light guide is placed at the opening part and is provided with a reflection surface that reflects the solar light and leads it into the container part.

5. The solar heat collecting apparatus as claimed in Claim 4, wherein:
the light guide is provided with an entrance part of the solar light and an exit part that output the solar light into the container part, and
the light guide gradually widens from the entrance part towards the exit part.

6. The solar heat collecting apparatus as claimed in Claim 5, wherein:
the light guide gradually widens from the exit part towards the entrance part.

7. The solar heat collecting apparatus as claimed in Claim 5 or Claim 6, wherein:
the entrance part of the light guide is further provided with a spherical entrance window.

8. The solar heat collecting apparatus as claimed in any one of Claim I to Claim 7, wherein:
the closed part has a depressed part, and
the opening part is formed with a transparent material that lets the solar light through to the bottom of the depressed part.

9. The solar heat collecting apparatus as claimed in any one of Claim 1 to Claim 8, further comprising:
a light collecting means for collecting the solar light.

10. The solar heat collecting apparatus as claimed in Claim 9, wherein:
the light collecting means is a Fresnel lens that curves towards the opening part to form a depression.

11. The solar heat collecting apparatus as claimed in any one of Claim I to Claim 10, further comprising:
a tracking means for tracking the sun in accordance with the movement of the sun.

12. The solar heat collecting apparatus as claimed in Claim 11, wherein:
the tracking means moves the light collecting means with reference to the container part.

13. The solar heat collecting apparatus as claimed in Claim 10 or Claim 11, wherein:
the tracking means is provided outside the opening part and has a rotation axis to rotate the light collecting means, and
the entrance part of the light guide is positioned on the rotation axis.

14. The solar heat collecting apparatus as claimed in any one of Claim 11 to Claim 13, wherein:
the tracking means moves the container part.
